Europäisches Patentamt

European Patent Office

Office européen des brevets

(19)

(11) Publication number: **0 242 121 B1**

## (12) EUROPEAN PATENT SPECIFICATION

(45) Date of publication of patent specification: **02.09.92**

(51) Int. Cl.5: **G11B 20/10**, G11B 27/28, G11B 31/00, H04H 1/00

(21) Application number: **87303057.1**

(22) Date of filing: **08.04.87**

(54) **Synchronising systems for digital apparatus.**

(30) Priority: **10.04.86 JP 82550/86**

(43) Date of publication of application:
**21.10.87 Bulletin  87/43**

(45) Publication of the grant of the patent:
**02.09.92 Bulletin  92/36**

(84) Designated Contracting States:
**DE FR GB NL**

(56) References cited:
**EP-A- 0 162 461**
**WO-A-84/00435**
**GB-A- 2 089 094**
**US-A- 4 498 170**

(73) Proprietor: **SONY CORPORATION**
**7-35 Kitashinagawa 6-chome Shinagawa-ku**
**Tokyo 141(JP)**

(72) Inventor: **Nakagami, Taro Patents Division**
**Sony Corporation 7-35Kitashinagawa**
**Shinagawa-ku Tokyo 141(JP)**
Inventor: **Fukami, Takeshi Patents Division**
**Sony Corporation 7-35Kitashinagawa**
**Shinagawa-ku Tokyo 141(JP)**
Inventor: **Terauchi, Toshiro Patents Division**
**Sony Corporation 7-35Kitashinagawa**
**Shinagawa-ku Tokyo 141(JP)**

(74) Representative: **Pilch, Adam John Michael et al**
**D. YOUNG & CO. 10 Staple Inn**
**London WC1V 7RD(GB)**

EP 0 242 121 B1

## Description

This invention relates to synchronising systems for digital apparatus.

A digital transmission system has previously been proposed for time-division-multiplexing digital output signals from a plurality of digital signal reproducing apparatus (for example, compact disc players) by a multiplexer and then transmitting the multiplexed digital output signals, for example in Japanese Patent Application No. 58-210353 entitled "Digital signal transmission system".

In this case, it is necessary to synchronise digital signals output from respective digital signal reproducing apparatus when the respective digital signals are time-division-multiplexed. However, in general, each of the plurality of digital signal reproducing apparatus is respectively used as a master for synchronisation of the respective digital signals, so that each multiplexer is necessarily provided with a digital-to-analog (D/A) converter and an analog-to-digital (A/D) converter, thereby incurring an increase in the cost and a degradation in data quality.

European Patent Application No. EP-A-0 162 461 discloses a digital signal transmission system in which digital data from a plurality of sources (such as a stereo music source, a broadcast communication source and a facsimile information source) are time-division-multiplexed for transmission, such as by means of a cable television network. In such a system, it is necessary for the digital data from each source and the multiplexer to be synchronised.

According to the present invention there is provided a synchronising system comprising:

a plurality of digital signal reproducers; and

a digital signal multiplexer supplied with an output signal from each of said digital signal reproducers, and for producing data organised in a plurality of channels of digital signals;

characterised in that:

said digital signal reproducers each comprise a digital output modulator, a digital input demodulator and a decoder;

said digital signal multiplexer includes means for generating a clock pulse and a word synchronising signal, a digital output modulator for producing a composite digital signal from said generated clock pulse and word synchronising signal, and a plurality of digital input demodulators;

circuit connecting means interface the digital output modulator of said digital signal multiplexer and each digital input demodulator of said plurality of digital signal reproducers so as to supply a demodulated clock pulse and word synchronising signal to each decoder thereof;

means is provided for generating a frame synchronising signal for said digital signal multiplexer; and

circuit connecting means interface each digital output modulator of said plurality of digital signal reproducers and a corresponding one of said digital input demodulators of said digital signal multiplexer so as to transmit the decoded data of each said decoder to said digital signal multiplexer in synchronism with said demodulated clock pulse and word synchronising signal.

A preferred embodiment of the present invention, to be described in greater detail hereinafter, provides a synchronising system for digital signal reproducers which can improve the above-mentioned defect of the previously-proposed system.

The preferred synchronising system is provided with a digital interface between the plurality of digital signal reproducers and the digital signal multiplexer.

The invention will now be described by way of example with reference to the accompanying drawings, throughout which like parts are referred to by like references, and in which:

Figures 1A to 1E are diagrams showing a format of a digital signal reproduced by a digital signal multiplexer according to an embodiment of the present invention;

Figure 2 is a circuit block diagram showing a circuit configuration of an embodiment of the present invention;

Figures 3 to 7 are diagrams showing formats of digital signals in detail;

Figures 8 and 9 are block diagrams showing a circuit configuration of an embodiment which transmits a digital signal from a centre to each terminal via an optical circuit; and

Figures 10A to 10C are diagrams showing a format of a digital audio interface.

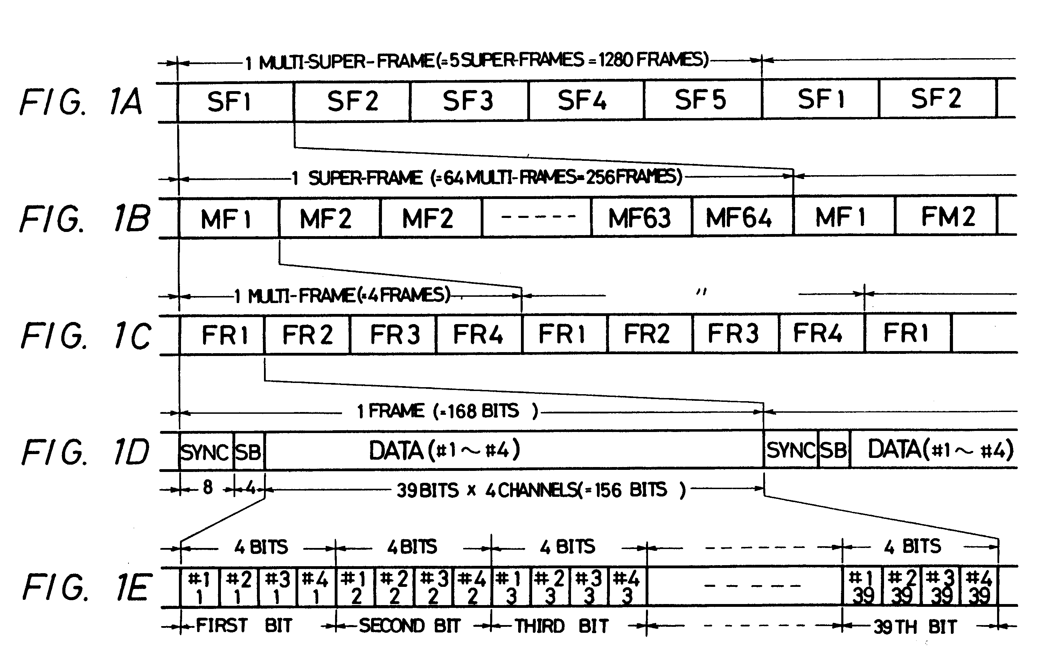

Figures 1A to 1E are diagrams showing an example of a format of a digital signal Sd when a plurality of digital data is transmitted.

Referring to Figure 1D, the digital signal to be transmitted is a binary signal which takes a value "0" or "1". 168 bits of the digital signal are determined as a basic unit which forms one frame. A cyclic period of the frame FR is determined as 1/44.1 kHz = 22.7 $\mu$sec.

As shown in Figure 1C, one multi-frame MF is formed of 4 frames FR1 to FR4, and a super-frame SF is formed of 64 multi-frames MF1 to MF64 as shown in Figure 1B. Further, as shown in Figure 1A, a multisuperframe is formed of 5 super-frames SF1 to SF5.

Each frame FR comprises an 8-bit synchronising code SYNC, a 4-bit service portion SB and a 156-bit data portion DATA in this order, as shown in Figure 1D.

In this case, the synchronising codes SYNC are arranged to be different in a bit pattern between first frames FR1 of the frame MF and the super-frame SF so that they can be distinguished as the first ones of these two frames MF and SF. The service portion SB, as will be later described in detail, has information with respect to the data portion DATA.

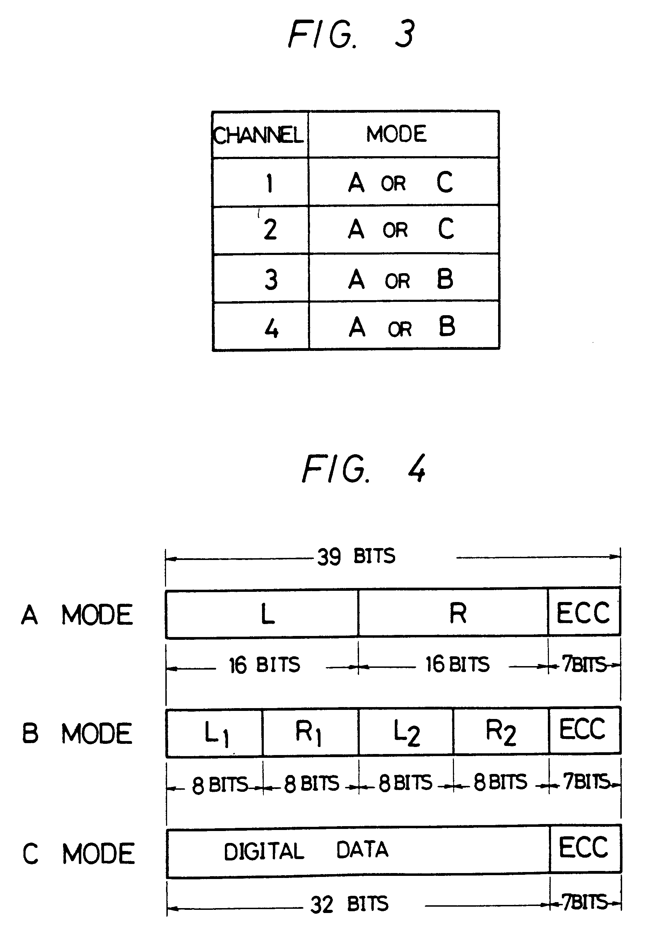

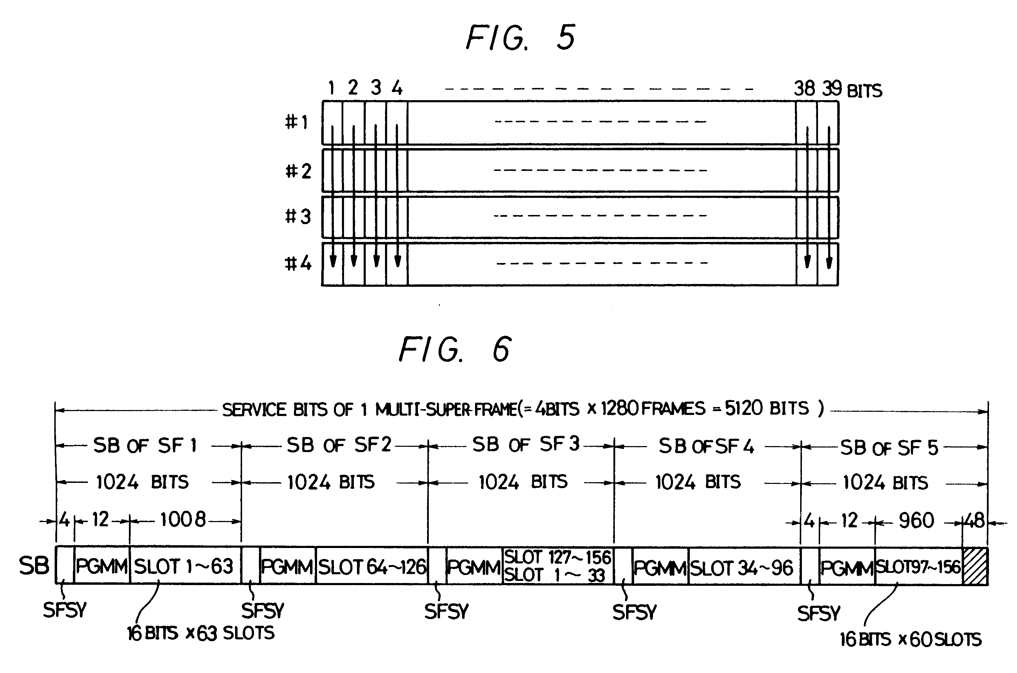

The data portion DATA has its 156 bits divided into four independent channels #1 to #4, each having 39 bits, as shown in Figure 5, and as used in this form. Each of the channels #1 to #4 has its available modes determined as shown in Figure 3.

These modes, namely A, B and C modes, have respective specified formats and signal contents as shown in Figure 4. Specifically, the A mode comprises left and right stereo audio signals L and R sampled by a sampling frequency of 44.1 kHz and encoded as 16-bit PCM signals with a 7-bit error correcting code ECC (formed, for example, by a Bose-Chaudhuri-Hocquenghem (BCH) code) added thereto, which corresponds to a digital signal as reproduced by a compact disc (CD) player.

The B mode comprises 2 sets of stereo audio signals $L_1$, $R_1$ and $L_2$, $R_2$ sampled by a sampling frequency of 44.1 kHz and encoded as 8-bit PCM signals with a 7-bit error correcting code ECC added thereto. Incidentally, stored in a channel in the B mode are signals $L_1$ - $R_2$ for which noise reduction is effected by compression or extension thereof.

The C mode comprises 32-bit digital data, for example programs and data for a computer, image data, data reproduced from a CD-ROM, and the like, with a 7-bit error correcting code ECC added thereto. It should be noted that in the C mode, one multi-frame MF, that is 156 bits (= 39 bits x 4 frames) is determined as a basic unit which can then be time-divided and used, according to requirements, by a plurality of digital data to be transmitted at a bit unit. Therefore, the C mode allows a maximum of 128 kinds of digital data per channel to be transmitted at a bit rate of 1 bit/1 multi-frame (= 1 bit /((1/44.1 kbps) x 4 frames)≅11.025 kbps), or if one kind of digital data is transmitted, it can be transmitted at a bit rate of 128 bits/1 multi-frame (= 128 bits /((1/44.1 kbps) x 4 frames)≅1.41 Mbps).

The data portion DATA of 156 bits, as shown in Figure 1E and in the sequence or time series indicated by arrows in Figure 5, is constructed in a manner that data is fetched out one bit by one bit from each of the channels #1 to #4 in turn and serially placed in a frame FR.

The service portion or bit SB has a format determined as shown in Figure 6. Specifically, Figure 6 shows only service bits SB contained in one multi-super-frame in order. Therefore, 1024-bit data blocks from the head are respectively assigned as the service bit SB for super-frames SF1 to SF5. First 4-bit data SFSY of the service bit SB in each of the super-frames SF1 to SF5 is a synchronising code indicative of a start point of the service bit SB in each multi-super-frame SF which has a particular determined bit pattern. In particular, the synchronising code SFSY of the first multi-super-frame SF1 indicates a start point of the service bit SB of each multi-super-frame so that it has a bit pattern different from those of the other super-frames SF2 to SF5.

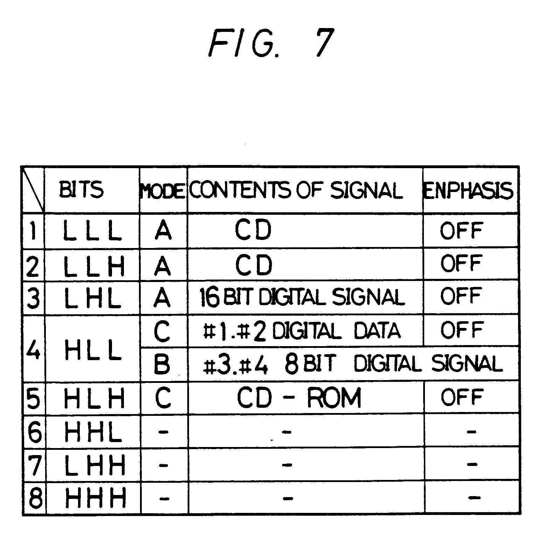

A 12-bit data portion PGMM following the synchronising code SFSY is divided into 4 channels by a unit of 3-bit data and each of the 3-bit data is mode data which indicates a mode of each of the channels #1 to #4. Figure 7 shows an example of a relationship between the contents of the data portion PGMM and the modes A, B or C.

The remaining 1008 bits in the diagrams of Figure 6 are divided into 63 slots SLOT each of 16 bits, and each of which indicates information on the channels #1 and #2, for example the arrangement of the data bit DATA, category of service (contents of signal), password, address and the like. Incidentally, the service bit SB in the fifth multi-super-frame SF5 has only 60 slots used and the rest 48 bits left unused.

In the signal format as described above, the transmission bit rate of the digital signal Sd is calculated as follows:

$$168 \text{ bits} \times 44.1 \text{ kHz} \cong 7.4 \text{ Mbps}$$

The band width required to transmit the digital signal Sd, which is half of the transmission bit rate, is calculated as follows:

$$7.4 \text{ Mbps} / 2 = 3.7 \text{ MHz}$$

Therefore, the digital signal Sd can be accommodated within the band width for a baseband video signal in television broadcasting, namely 4.5 MHz, so that any channel for television broadcasting can be used to transmit the digital signal Sd. In other words, if there is an available band which can transmit a video signal, 4-channel data in any of the A to C modes as shown in Figure 4 can be transmitted.

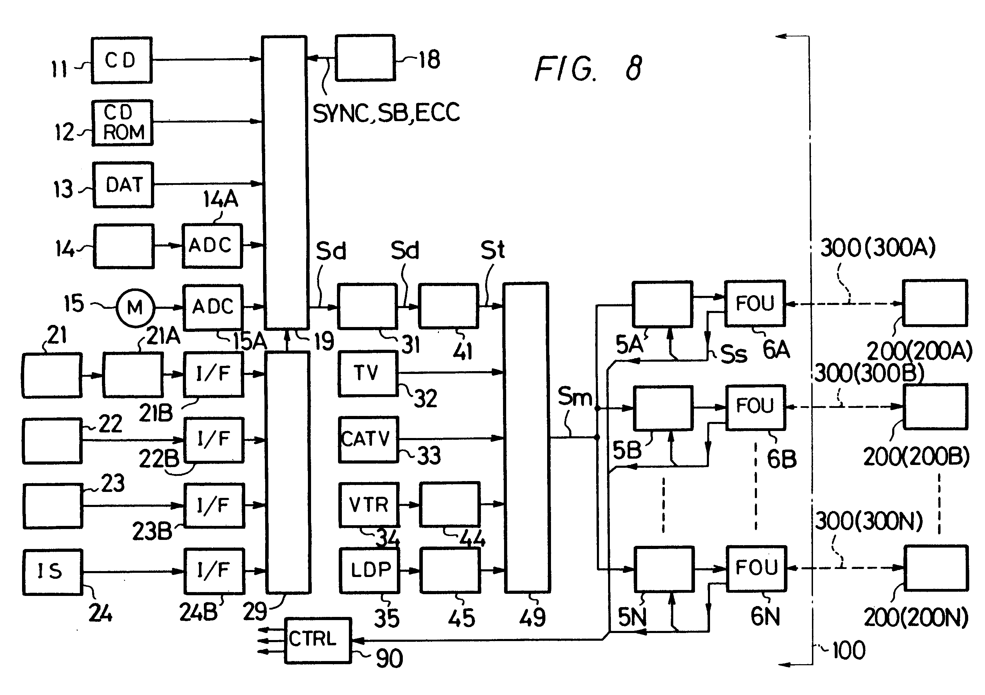

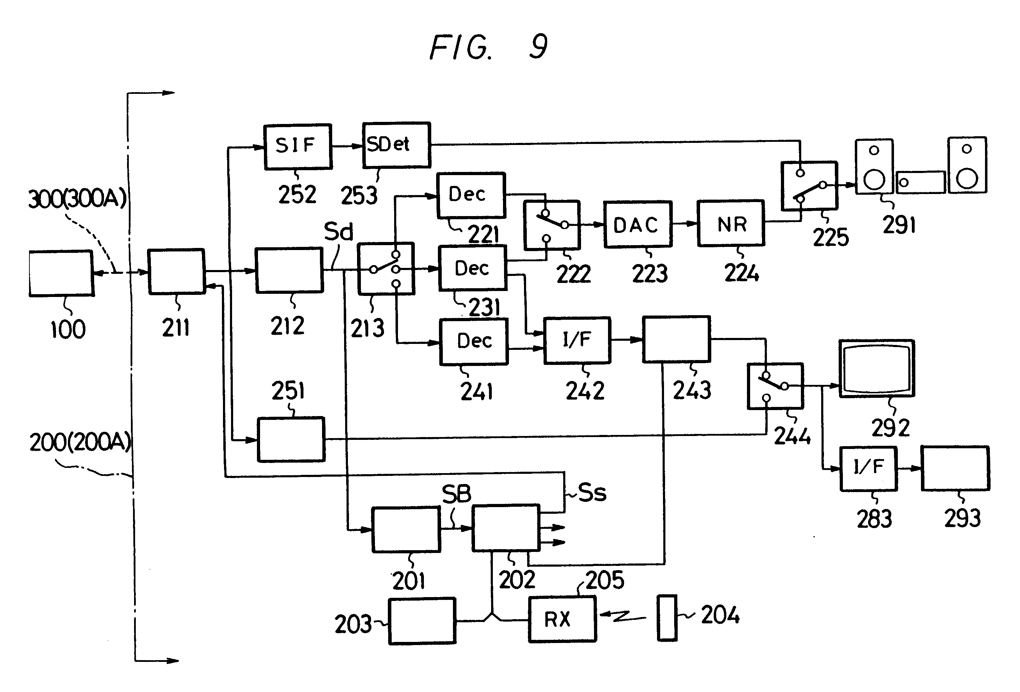

Figures 8 and 9 show an example of a bidirectional community antenna television (CATV) system including optical communication using the digital signal Sd formatted as described above.

In Figure 8, there is shown a CATV centre 100 and terminals 200. Let it be assumed, as an example, that the centre 100 can cover a service area as large as a telephone station, the terminals 200 are installed in individual homes or offices, and the centre 100 and the terminals 200 are connected to each other by bi-directional optical fibre lines 300.

In the centre 100, there are provided signal sources 11 to 15 of signals which are transmitted mainly in the A mode or the B mode. More specifically, the signal source 11 designates a CD player, the signal source 12 a CD-ROM player (drive unit), the signal source 13 a digital audio tape (DAT) player, the signal source 14 an analog tape player, and the signal source 15 a microphone. Digital signals reproduced by the players 11 to 13, after any errors contained in the digital signals have been corrected, are supplied to a multiplexer 19. Analog signals from the player 14 and the microphone 15 are supplied to A/D converters 14A and 15A to be converted into digital signals which are then also supplied to the multiplexer 19. Further, the error correction code ECC, the synchronising code SYNC and the service bit SB are generated by a generation circuit 18 and then supplied to the multiplexer 19.

Signal sources 21 to 24 provide signals which are mainly transmitted in the C mode. Specifically, the signal source 21 designates a video camera, the signal source 22 a computer, the signal source 23 a teletext receiver apparatus, and the signal source 24 an image scanner. A video signal from the camera 21 is supplied to a memory circuit 21A, wherein the video signal is converted into a digital signal and one field or one frame portion thereof is stored in a memory of the memory circuit 21A. Then, image data stored in the memory circuit 21A is read out at a predetermined speed as serial data. Therefore, a video signal representative of a still image is derived from the memory circuit 21A as a serial digital signal. This serial digital signal is supplied to another multiplexer 29 through an interface 21B of RS-232C type.

The output signals from the signal sources 22 to 24 are derived as serial digital signals and supplied to the multiplexer 29 through RS-232C interfaces 22B to 24B, respectively.

The digital signals supplied to the multiplexer 29 are selected and multiplexed to a C mode signal (the error correcting code ECC not yet having been added thereto) in time-division manner. Then, the C mode signal is supplied to the multiplexer 19. In the multiplexer 19, one of the digital signals supplied thereto is selected, added to the error correcting code ECC generated by the generation circuit 18 to form an A mode, B mode or C mode signal, and thereafter distributed to the channels #1 to #4. The distributed signals have the synchronising code SYNC and service bit SB added thereto to form the digital signal Sd formatted in the aforementioned manner, the digital signal Sd being output from the multiplexer 19.

The CD player signal source 11 may comprise, for example, four separate players. In the same manner, the other signal sources and succeeding circuits may also respectively represent a plurality of the apparatus or circuits.

A master controller 90, which may comprise a microcomputer, supplies control signals (not shown) to the signal sources 11 to 15 and 21 to 24, their succeeding circuits 14A, 15A, 21A and 21B to 24B, the multiplexers 19 and 29, and the generation circuit 18 in such a manner that a desired signal in the signals delivered from the signal sources 11 to 15 and 21 to 24 is multiplexed with the digital signal Sd in time-division manner.

The signal Sd is supplied to a scrambling circuit 31, is scrambled therein, and the scrambled signal Sd is supplied to a modulator circuit 41 to be modulated to form a television signal St on a free or available channel (that is, a signal of the same type as a signal VSB-modulated by a video signal in normal television broadcasting) which signal is supplied to a mixing or superimposing circuit 49.

Signal sources 32 to 35 provide video signals, and in particular receivers 32 and 33 are respectively arranged to receive ordinary television broadcasts and other CATV broadcasts, the receivers each comprising, for example, an RF amplifier. Thus, the received television signals (on a plurality of channels) can be adjusted in level but are not demodulated, that is, the received signals are directly supplied to the superimposing circuit 49, without being changed in form from the received television signal.

The system further includes a player 34 for reproducing, for example, a U-standard cassette video tape, and also a laser disc player 35. A video signal and an audio signal reproduced by each of these players are supplied to respective modulator circuits 44 and 45 to be modulated to television signals for a free channel which are supplied to the superimposing circuit 49. The players 34,35 and the modulator circuits 44,45 may also represent a plurality of players and circuits.

Accordingly, the superimposing circuit 49 delivers a superimposed signal Sm formed by frequency-multiplexing the signal St with all the television signals supplied from the receivers 32,33 and the modulator circuits 44,45.

The signal Sm is supplied to tuner circuits 5A to 5N, provided for respective ones of the terminals 200A to 200N, each tuner circuit having stages from a channel selecting stage (tuner) to an image detecting stage. Therefore, the tuner circuits 5A to 5N output, according to channel selection, the signal St or a composed signal formed of a baseband video signal and an audio intermediate frequency signal of the corresponding channel. The channel selection effected by the tuner circuits 5A to 5N depends on a selection signal delivered from a corresponding one of the terminals 200A to 200N. It may therefore be understood that the superimposing circuit 49 and the tuner circuits 5A to 5N operate in combination as a selecting switch for selecting one from the signal St and the various video signals (and audio intermediate frequency signals).

The signal St and the video signals from the tuner circuits 5A to 5N are supplied to photoelectric converters (FOU) 6A to 6N to be converted into optical signals which in turn are transmitted to the terminals 200A to 200N via the optical fibre lines 300A to 300N.

The optical fibre lines 300 in this sytem transmit an optical signal converted from the baseband signal Sd or video signal for only one channel, so that low-price optical fibres may be used. Also, low-price apparatus may be used for the photoelectric converters 6A to 6N or the like.

Each of the terminals 200 is constructed as will now be described with reference to Figure 9.

In Figure 9, a system controller 202 comprises a microcomputer which, in response to input operations on an input keyboard 203, supplies control signals to respective circuits to effect various functions which will be explained later. When the terminal 200 receives the digital signal Sd, the system controller 202 generates the control signals also with reference to the service bit SB contained in the digital signal Sd.

A remote control commander 204 may, for example, use infrared rays, and a receiver circuit 205 receives command signals transmitted from the commander 204. The output from the receiver circuit 205 is supplied to the system controller 202, so that the terminal 200 is controlled so as to effect various functions by the commander 204, as well as by the input keyboard 203.

When a channel in the signal Sm is selected by the input keyboard 203 or the commander 204, a selection signal Ss indicative of the selected channel is generated by the system controller 202 and supplied to a photo-electric converter 211 to be converted into an optical signal, which is then transmitted to the CATV centre 100 through the optical fibre line 300. If, for example, the optical signal comes from the terminal 200A, it is first supplied to the photo-electric converter 6A through the optical fibre line 300A and then converted again into the original electrical selection signal Ss. The signal Ss is finally supplied to the tuner circuit 5A in which the channel selected by the input keyboard 203 or the commander 204 is selected. Therefore, the terminal 200A is supplied with an optical signal converted from either the signal Sd or one of the video signals of the channel selected by the keyboard 203 or commander 204.

When an optical signal is transmitted to the terminal 200, it is first supplied to the photo-electric converter 211 to be restored to the original signal Sd or the original video signal (and audio intermediate frequency signal).

If the digital signal Sd is selected, the signal output from the photo-electric converter 211 is supplied to a descrambling circuit 212 to be descrambled to the original digital signal Sd, which is then supplied to an identifying (ID) circuit 201 wherein the content of the signal Sd is identified with reference to the service bit SB. The identification result is supplied to the system controller 202.

Specifically, if a stereo signal in the A or B mode of the signal Sd (for example a signal reproduced by the CD player 11) is selected, the signal Sd output from the descrambling circuit 212 is supplied through a switching circuit 213 to a decoder 221 in which a desired digital signal is separated from the corresponding one of the channels #1 to #4, and error correction and error compensation are effected on the spearated digital signal.

The digital signal Sd subjected to the above processing is supplied through a switching circuit 222 to a D/A converter 223 to be converted into the original analog stereo signals L, R ($L_1$, $R_1$ or $L_2$, $R_2$). The stereo signals are supplied to an audio reproducing apparatus 291 through a noise reduction (NR) circuit 224 and a switching circuit 225, whereby the stereo signals are reproduced in the A or B mode. The noise reduction circuit 224 is turned on if the signal is in the B mode and turned off (so as to allow the signal to pass through unchanged) if the signal is in the A mode.

If a digital signal in the A mode within the signal Sd which is a program or data for a computer (for example, a signal reproduced by the CD-ROM player 12) is selected, the signal Sd output from the descrambling circuit 212 is supplied through the switching circuit 213 to a decoder 241 in which a desired digital signal is separated from the corresponding one of the channels #1 to #4, and only error correction is effected on the separated digital signal. Then, the error corrected signal is supplied to a personal computer 243 via an interface 242.

The computer 243 outputs a video signal, in accordance with the digital signal, which is supplied through a switching circuit 244 to a monitoring apparatus 292 which displays the processing results of the computer 243.

During this operation, a portion of the digital signal from the switching circuit 244 may be supplied through an interface (I/F) 283 to a printer 293, by which a hard copy of the display on the screen of the monitoring apparatus 292 can be obtained.

If a digital signal in the A mode within the signal Sd comprising both image data and audio data is selected, the signal Sd output from the descrambling circuit 212 is supplied through the switching circuit 213 to a decoder 231 in which a desired digital signal is separated from the corresponding one of the channels #1 to #4, only error compensation being effected on the image data of the seprated digital signal, whereas both error correction and error compensation are effected on the audio data of the separated digital signal.

The audio data from the decoder 231 is then supplied through the switching circuit 222 to the D/A converter 223. The image data from the decoder 231 is supplied through the interface 242 to the computer 243. Therefore, the audio data is reproduced by the audio reproducing apparatus 291 and the image data by the monitoring apparatus 292.

Incidentally, if data reproduced from a CD-ROM by the player 12 is required, address signals such as a track number of the CD-ROM and control signals such as a seek signal are input from the computer 243 by way of the system controller 202, the keyboard 203 or the commander 204. These address signals are then supplied to the photo-electric converter 211 as a part of the signal Ss from the system controller 202, to be converted into optical signals which in turn are transmitted to the centre 100 through the optical fibre line 300.

Assuming that the optical signal Ss is transmitted from the terminal 200A, the signal Ss is received by the photo-electric converter 6A and supplied to the controller 90 which controls the player 12, in accordance with the signal Ss, to reproduce the data specified by the computer 243 or the system controller 202. The reproduced data is transmitted to the terminal 200A.

If a digital signal in the C mode within the signal Sd (for example a video signal produced by the camera 21) is selected, the signal Sd output from the descrambling circuit 212 is supplied through the switching circuit 213 to the decoder 241, wherein the digital signal is separated from the corresponding one of the channels #1 and #2, and an error correction is effected on the separated digital signal. The error-corrected digital signal is supplied to the interface 242 wherein only desired bits are selected from the bit-by-bit time-shared or time-divided digital data DATA, and are supplied to the computer 243. Then, an image reproduced from the data supplied to the computer 243 is displayed on the screen of the monitoring apparatus 292, in the same manner as described above.

Further, if a video signal (with an audio intermediate frequency signal) from one of the signal sources 32 to 35 is selected by the input keyboard 203 or the commander 204, the video signal can be obtained from the photo-electric converter 211 and supplied through a trap or filter 251 for the audio intermediate frequency signal and via the switching circuit 244 to the monitoring apparatus 292 which displays an image resulting from the video signal on the screen thereof.

In the above-described processing of the video signal, the audio intermediate frequency signal from the photo-electric converter 211 is supplied through an audio intermediate frequency amplifier 252 to an audio detecting circuit 253 to be demodulated. Then, the demodulated audio signal is supplied through the switching circuit 225 to the audio reproducing apparatus 291 to be reproduced.

The CATV system as described above can therefore transmit a variety of video signals, audio signals and data from which users can select desired data.

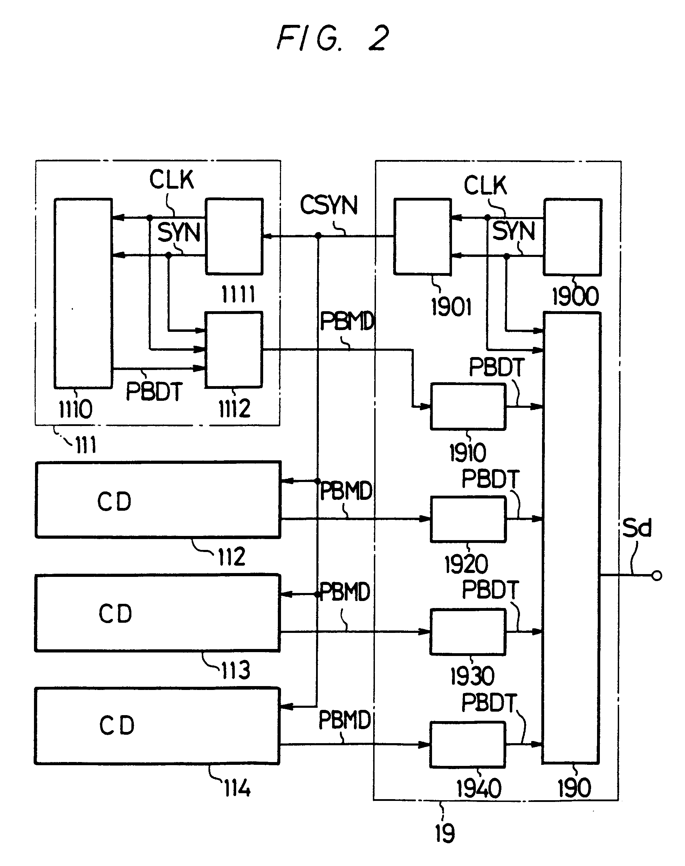

In addition to the above-described manner of operation of the CATV system as shown in Figure 8, an embodiment of the invention is arranged such that the multiplexer 19 supplies a clock signal and a synchronising signal to players 111 to 114 as shown in Figure 2 so that the players 111 to 114 are operated in synchronism with the clock signal and the synchronising signal. The synchronising system will now be described with reference to Figure 2.

In Figure 2, the multiplexer 19 is provided with a clock timing generator 1900 which generates a clock CLK (bit clock) and a synchronising signal SYN such as a frame synchronising signal. These signals CLK and SYN are supplied to a digital input/output (I/O) modulator circuit 1901 wherein the signals CLK and SYN are composed to form a digital I/O signal in the form of a composite digital signal CSYN which has a predetermined format. The signal CSYN is supplied to the CD player 111.

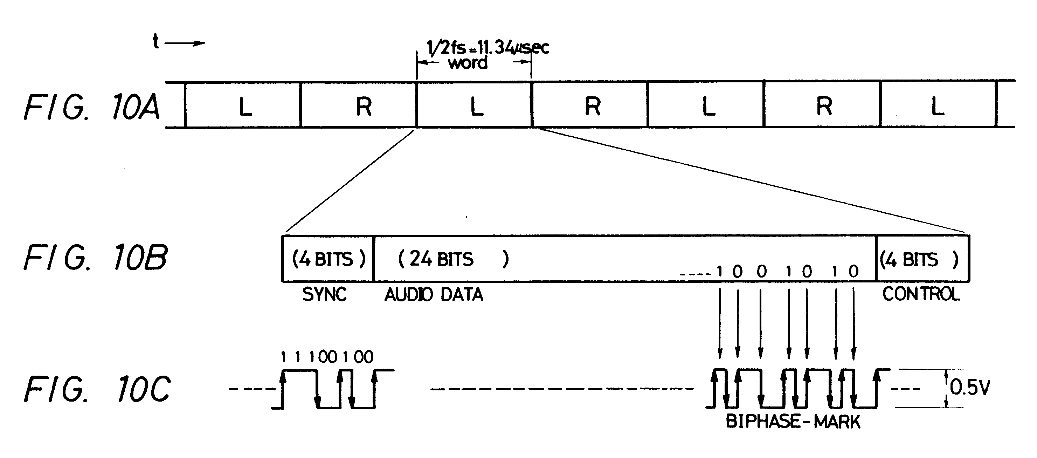

An example of a digital audio interface format will be explained with reference to Figures 10A to 10C. L channel data and R channel data are alternately transmitted with a cyclic period of 1/2fs (11.34 $\mu$sec) in time-division manner (Figure 10A). An example of the modulated data includes a frame formed of portions for a word synchronising signal (4 bits), audio data (24 bits, 16 bits of which are used) and a control signal (4 bits), as shown in Figure 10B. The word synchronising signal portion contains a particular pattern (for example 11100100). The 16-bit audio data portion is modulated in a manner called "biphase mark" wherein data is inverted once by a value "0" and twice by a value "1", as shown in Figure 10C. The audio data is transmitted as predetermined data and reproduced, when received, to provide a bit clock (CLK). Further, the word synchronising signal is reproduced as the above-mentioned frame synchronising signal SYN.

Returning now to Figure 2, the signal CSYN supplied to the player 111 is supplied to a digital demodulator circuit 1111 to be separated into the original clock CLK and synchronising signal SYN which are then supplied to a decoder section 1110 of the player 111 which reproduces digital data PBDT from a CD (not shown) in synchronism with the signals CLK and SYN and effects error correction and error compensation on the reproduced digital signal.

A digital I/O modulator circuit 1112 of the player 111 is supplied with the reproduced data PBDT as well as the signals CLK and SYN from the demodulator circuit 1111 so that the signal PBDT is modulated to the above-mentioned digital signal PBMD having the predetermined format which is synchronised with the signals CLK and SYN. The signal PBMD is supplied to the multiplexer 19.

In the multiplexer 19, the signal PBMD is supplied to a digital I/O demodulator circuit 1910, wherein the original reproduced data PBDT is derived from the signal PBMD and supplied to a multiplexer section 190.

The same operation is effected for the other players 112 to 114, wherein the respective signals PBMD are obtained in synchronism with the signals CLK and SYN separated from the signal CSYN supplied from the multiplexer 19 and supplied to respective demodulator circuits 1920 to 1940, wherein the reproduced data PBDT is obtained and then supplied to the multiplexer section 190.

In the above-described operation, the generator 1900 supplies the multiplexer section 190 with the signals CLK and SYN so that the reproduced data PBDT from the players 111 to 114 are multiplexed, in time-division manner, to the channels #1 to #4 in synchronism with the signals CLK and SYN, to be output as the digital signal Sd.

In particular, the players 111 to 114 are commonly supplied from the multiplexer 19 with the clock CLK and synchronising signal SYN required to reproduce signals from a CD, so that the reproduced data PBDT are all synchronised with each other. It is therefore possible to multiplex in time-division manner the reproduced data PSDT in the multiplexer section 190 without D/A conversion and A/D conversion, whereby the reproduced data from a CD is not deteriorated when it is received by the terminal 200.

The above description is given with reference to a case in which the reproduced data from four CD players 111 to 114 are multiplexed in time-division manner. For other cases, for example, when the decoder section 1110 and D/A converter of the CD player are separately accommodated in different cabinets or the like in the CD player, if the analog signal is reproduced in a manner such that the signal CSYN is transmitted from the D/A converter, that is from a data processing section to the reproducing section 1110 to obtain the reproduced data PBDT which in turn is transmitted to the D/A converter to be converted into a corresponding analog signal, a PLL (phase locked loop) is not necessary for D/A conversion, and consequently, the reproduced analog signal would not be degraded as a result of jitter or fluctuations produced by the PLL.

Further, the other players 12,13, converters 14A,15A, and the like are also operated by the common clock and synchronising signal, so that it is possible to obtain synchronised data.

Also, the switching circuit 244 can not only change over video signals supplied thereto but also mix and superimpose the signals.

It will be understood from the explanation given above that, since the players 111 to 114 are commonly supplied from the multiplexer 19 with the clock CLK and synchronising signal SYN required to reproduce a signal from a CD so as to obtain the reproduced data PSDT, the plural reproduced data PBDT are all synchronised with each other, so that it is possible to time-division multiplex the reproduced data PBDT in the multiplexer section 190 without D/A conversion and A/D conversion, whereby the reproduced data, for example from a CD, is not deteriorated when it is received by the terminal 200.

## Claims

1.  A synchronising system comprising:

    a plurality of digital signal reproducers (111 to 114); and

    a digital signal multiplexer (19) supplied with an output signal (PBMD) from each of said digital signal reproducers (111 to 114), and for producing data organised in a plurality of channels of digital signals (Sd);

    characterised in that:

    said digital signal reproducers (111 to 114) each comprise a digital output modulator (1112), a digital input demodulator (1111) and a decoder (1110);

    said digital signal multiplexer (19) includes means (1900) for generating a clock pulse (CLK) and a word synchronising signal (SYN), a digital output modulator (1901) for producing a composite digital signal (CSYN) from said generated clock pulse (CLK) and word synchronising signal (SYN), and a plurality of digital input demodulators (1910, 1920, 1930, 1940);

    circuit connecting means interface the digital output modulator (1901) of said digital signal multiplexer (19) and each digital input demodulator (1111) of said plurality of digital signal reproducers (111 to 114) so as to supply a demodulated clock pulse (CLK) and word synchronising signal (SYN) to each decoder (1110) thereof;

means (18) is provided for generating a frame synchronising signal (SYNC) for said digital signal multiplexer (19); and

circuit connecting means interface each digital output modulator (1112) of said plurality of digital signal reproducers (111 to 114) and a corresponding one of said digital input demodulators (1910, 1920, 1930, 1940) of said digital signal multiplexer (19) so as to transmit the decoded data (PBDT) of each said decoder (1110) to said digital signal multiplexer (19) in synchronism with said demodulated clock pulse (CLK) and word synchronising signal (SYN).

2. A synchronising system according to claim 1, in which said digital signal multiplexer (19) is operable to produce a time-division multiplexed digital signal (Sd) arranged in a frame format including:

the word synchronising signal (SYN);

a service bit signal (SB) indicating a transmission mode; and

plural channels of digital data;

whereby the digital signals (PBMD) from said plurality of digital signal reproducers (111 to 114) are multiplexed according to said service bit signal (SB).

3. A synchronising system according to claim 2, in which at least one of the plural channels of digital data includes left and right channels (L,R) of stereo audio digital signals, each being sampled at 44.1 kHz and coded in 16 bits.

4. A synchronising system according to claim 2 or claim 3, in which at least one of the plural channels of digital data includes left and right channels (L,R) of stereo audio digital signals, each being sampled at 44.1 kHz and coded in 8 bits.

5. A synchronising system according to claim 2, claim 3 or claim 4, in which at least one of the plural channels of digital data includes a computer program.

6. A synchronising system according to any one of claims 2 to 5, in which the digital output modulator (1901) of said digital signal multiplexer (19) produces a digital format signal (CSYN) including said word synchronising signal (SYN) from said generating means (1900), audio data and control data.

7. A synchronising system according to claim 6, in which said audio data is modulated by bi-phase mark.

8. A synchronising system according to claim 6 or claim 7, in which said digital input demodulator (1111) of each digital signal reproducer (111 to 114) demodulates said word synchronising signal (SYN) and the clock pulse (CLK) from said digital format signal (CSYN) so as to supply the same to the decoder (1110).

9. A synchronising system according to claim 8, in which the digital output modulator (1112) of each digital signal reproducer (111 to 114) produces a digital format signal (PBMD) including the word synchronising signal (SYN), digital audio data (PBDT) and control data.

10. A synchronising system according to claim 9, in which the digital input demodulator (1910) of said signal multiplexer (19) demodulates said digital audio data from each digital output modulator (1112) of said plurality of digital signal reproducers (111 to 114).

**Patentansprüche**

1. Synchronisierungssystem, das umfaßt:
eine Vielzahl von digitalen Signalwiedergabeeinrichtungen (111 bis 114);
und einen digitalen Signalmultiplexer (19), der mit einem Ausgangssignal (PBMD) jeder der digitalen Signalwiedergabeeinrichtungen (111 bis 114) versorgt wird, zur Erzeugung von Daten, die in einer Vielzahl von Kanälen von digitalen Signalen (Sd) organisiert sind;
dadurch gekennzeichnet:
die digitalen Signalwiedergabeeinrichtungen (111 bis 114) umfassen jeweils einen digitalen Ausgangsmodulator (1112), einen digitalen Eingangsmodulator (1111) und einen Decoder (1110);
der digitale Signalmultiplexer (19) schließt Mittel (1900) zur Erzeugung eines Taktimpulses (CLK) und eines Wortsynchronisierungssignals (SYN), einen digitalen Ausgangsmodulator (1901) zur Erzeugung eines zusammengesetzen digitalen Signals (CSYN) aus dem erzeugten Taktimpuls (CLK) und dem Wortsynchronisierungssignal (SYN), und eine Vielzahl von Demodulatoren (1910, 1920, 1930, 1940) mit digitalem Eingang ein;
Schaltungsverbindungseinrichtungen befinden sich zwischen dem digitalen Ausgangsmodulator (1901) des digitalen Signalmultiplexers (19) und jedem digitalen Eingangsmodulator (1111) der Vielzahl von digitalen Signalwiedergabeeinrichtungen (111 bis 114), um so einen demodulierten Taktimpuls (CLK) und ein Wortsynchronisierungssignal (SYN) für jeden Decoder zu liefern;

eine Einrichtung (18) ist zur Erzeugung eines Rahmensynchronisierungssignals (SYNC) für den digitalen Signalmultiplexer (19) vorgesehen; und

Schaltungsverbindungseinrichtungen befinden sich zwischen jedem digitalen Ausgangsmodulator (1112) der Vielzahl von digitalen Signalwiedergabeeinrichtungen (111 bis 114) und einer entsprechenden Vielzahl von digitalen Eingangsdemodulatoren (1910, 1920, 1930,1940) der digitalen Signalmultiplexer (19), um so die decodierten Daten (PBDT) jedes Decoders (1110) zum digitalen Signalmultiplexer (19) synchron mit dem demodulierten Taktimpuls (CLK) und dem Wortsynchronisierungssignal (SYN) zu übertragen.

2. Synchronisierungssystem nach Anspruch 1, bei welchem der digitale Signalmultiplexer (19) in der Lage ist, ein zeitmultigeplextes digitales Signal (Sd) zu erzeugen, das in einem Rahmenformat angeordnet ist, das umfaßt:

das Wortsynchronisierungssignal (SYN);

ein Hilfsbit- Signal (SB), das einen Übertragungsmodus anzeigt; und mehrere Kanäle von digitalen Daten;

wobei die digitalen Signale (PBMD) aus der Vielzahl der digitalen Signalwiedergabeeinrichtungen (111 bis 114) entsprechend dem Hilfsbit- Signal (SB) in einer Multiplexeinrichtung verarbeitet werden.

3. Synchronisierungssystem nach Anspruch 2, bei dem wenigstens einer von mehreren Kanälen von digitalen Daten rechte und linke Kanäle (L,R) von digitalen Stereoaudiosignalen umfaßt, die jeweils bei 44,1 kHz abgetastet werden und in 16 Bits codiert werden.

4. Synchronisierungssystem nach Anspruch 2 oder 3, bei dem wenigstens einer von mehreren Kanälen von digitalen Daten linke und rechte Kanäle (L,R) von digitalen Stereoaudiosignalen umfaßt, die jeweils bei 44,1 kHz abgetastet werden und in 8 Bits codiert werden.

5. Synchroniserungssystem nach Anspruch 2, 3 oder 4, bei welchem wenigstens einer von mehreren Kanälen von digitalen Daten ein Computerprogramm umfaßt.

6. Synchronisierungssystem nach einem der Ansprüche 2 bis 5, bei welchem der digitale Ausgangsmodulator (1901) des digitalen Signalmultiplexers (19) ein digitales Formatsignal (CSYN) erzeugt, das das Wortsynchronisierungssignal (SYN) aus den Erzeugungsmitteln (1900), die Audiodaten und die Steuerdaten umfaßt.

7. Synchronisierungssystem nach Anspruch 6, bei welchem die Audiodaten durch Zweiphasenzeichen markiert werden.

8. Synchronsierungssystem nach Anspruch 6 oder 7, bei welchem der digitale Eingangsmodulator (1111) jeder der digitalen Signalwiedergabeeinrichtungen (111 bis 114) das wortsynchronisierende Signal (SYN) und den Taktimpuls (CLK) des digitalen Formatsignals (CSYN) demoduliert, um es dem Decoder (1110) zuzuführen.

9. Synchronisierungssystem nach Anspruch 8, bei welchem der digitale Ausgangsmodulator (1112) jeder der digitalen Signalwiedergabeeinrichtungen (111 bis 114) ein digitales Formatsignal (PBMD) erzeugt, das das Wortsynchronisierungssignal (SYN), das digitale Audiosignal (PBDT) und die Steuerdaten umfaßt.

10. Synchronisierungssystem nach Anspruch 9, bei welchem der digitale Eingangsdemodulator (1910) des Signalmultiplexers (19) die digitalen Audiodaten jedes digitalen Ausgangsmodulators (1112) aus der Vielzahl der digitalen Signalwiedergabeeinrichtungen (111 bis 114) demoduliert.

**Revendications**

1. Un système de synchronisation comprenant:

un ensemble de dispositifs de reproduction de signal numérique (111 à 114); et

un multiplexeur de signaux numériques (19) qui reçoit un signal de sortie (PBMD) provenant de chacun des dispositifs de reproduction de signal numérique (111 à 114), et qui est destiné à produire des données organisées en un ensemble de canaux de signaux numériques (Sd);

caractérisé en ce que :

chacun des dispositifs de reproduction de signal numérique (111 à 114) comprend un modulateur de sortie numérique (1112), un démodulateur d'entrée numérique (1111) et un décodeur (1110);

le multiplexeur de signaux numérique (19) comprend des moyens (1900) qui sont destinés à générer des impulsions d'horloge (CLK) et un signal de synchronisation de mot (SYN), un modulateur de sortie numérique (1901) destiné à produire un signal numérique composite (CSYN) à partir des impulsions d'horloge (CLK) et du signal de synchronisation de mot (SYN) qui sont générés, et un ensemble de démodulateurs d'entrée numériques (1910, 1920, 1930, 1940);

des moyens de connexion de circuit assurent une fonction d'interface entre le modulateur de sortie numérique (1901) du multiplexeur de signaux numériques (19) et chaque démodulateur d'entrée numérique (1111) de l'ensemble de dispositifs de reproduction de signal numérique (111 à 114), de façon à fournir à chaque décodeur (1110) des dispositifs de reproduction de signal numérique des impulsions d'horloge (CLK) et un signal de synchronisation de mot (SYN) démodulés;

des moyens (18) sont incorporés dans le but de générer un signal de synchronisation d'image (SYNC) pour le multiplexeur de signaux numériques (19); et

des moyens de connexion de circuit assurent la fonction d'interface entre chaque modulateur de sortie numérique (1112) de l'ensemble de dispositifs de reproduction de signal numérique (111 à 114), et l'un correspondant des démodulateurs d'entrée numériques (1910, 1920, 1930, 1940) du multiplexeur de signaux numériques (19), de façon à émettre les données décodées (PBDT) de chaque décodeur (1110) vers le multiplexeur de signaux numériques (19), en synchronisme avec les impulsions d'horloge (CLK) et le signal de synchronisation de mot démodulés (SYN).

2. Un système de synchronisation selon la revendication 1, dans lequel le multiplexeur de signaux numériques (19) peut fonctionner de façon à produire un signal numérique en multiplex temporel (Sd) ayant un format de trame, comprenant :

le signal de synchronisation de mot (SYN);

un signal de bits de service (SB) indiquant un mode de transmission; et

un ensemble de canaux de données numériques;

grâce à quoi les signaux numériques (PBMD) qui proviennent de l'ensemble de dispositifs de reproduction de signal numérique (111 à 114) sont multiplexés conformément au signal de bits de service (SB).

3. Un système de synchronisation selon la revendication 2, dans lequel l'un au moins des canaux de l'ensemble de canaux de données numériques comprend des canaux gauche et droit (L, R) de signaux numériques audio stéréophoniques, chacun de ces signaux étant échantillonnés à 44,1 kHz et codé en 16 bits.

4. Un système de synchronisation selon la revendication 2 ou la revendication 3, dans lequel l'un au moins des canaux de l'ensemble de canaux de données numériques comprend des canaux gauche et droit (L, R) de signaux numériques audio stéréophoniques, chacun de ces signaux étant échantillonné à 44,1 kHz et codé en 8 bits.

5. Un système de synchronisation selon la revendication 2, la revendication 3 ou la revendication 4, dans lequel l'un au moins des canaux de l'ensemble de canaux de données numériques achemine un programme d'ordinateur.

6. Un système de synchronisation selon l'une quelconque des revendications 2 à 5, dans lequel le modulateur de sortie numérique (1901) du multiplexeur de signaux numériques (19) produit un signal de format numérique (CSYN) qui contient le signal de synchronisation de mot (SYN) provenant des moyens de génération (1900), des données audio et des données de commande.

7. Un système de synchronisation selon la revendication 6, dans lequel les données audio sont modulées en mode "biphase symbole"

8. Un système de synchronisation selon la revendication 6 ou la revendication 7, dans lequel le démodulateur d'entrée numérique (1111) de chaque dispositif de reproduction de signal numérique (111 à 114) démodule le signal de synchronisation de mot (SYN) et les impulsions d'horloge (CLK) à partir du signal de format numérique (CSYN), de façon à les fournir au décodeur (1110).

9. Un système de synchronisation selon la revendication 8, dans lequel le modulateur de sortie numérique (1112) de chaque dispositif de reproduction de signal numérique (111 à 114) produit un signal de format numérique (PBDM) comprenant le signal de synchronisation de mot (SYN), des données audio numériques (PBDT) et des données de commande.

10. Un système de synchronisation selon la revendication 9, dans lequel le démodulateur d'entrée numérique (1910) du multiplexeur de signaux (19) démodule les données audio numériques provenant de chaque modulateur de sortie numérique (1112) de l'ensemble de dispositifs de reproduction de signal numérique (111 à 114).

*FIG. 1A*

| | SF1 | SF2 | SF3 | SF4 | SF5 | SF1 | SF2 | |

←———— 1 MULTI-SUPER-FRAME (=5 SUPER-FRAMES =1280 FRAMES) ————→

*FIG. 1B*

| MF1 | MF2 | MF2 | - - - - - | MF63 | MF64 | MF1 | FM2 |

←———— 1 SUPER-FRAME (=64 MULTI-FRAMES=256 FRAMES) ————→

*FIG. 1C*

| FR1 | FR2 | FR3 | FR4 | FR1 | FR2 | FR3 | FR4 | FR1 | |

←—— 1 MULTI-FRAME (=4 FRAMES) ——→     "

*FIG. 1D*

| SYNC | SB | DATA (#1 ~ #4) | SYNC | SB | DATA (#1 ~ #4) |

←—— 1 FRAME (=168 BITS ) ——→

←— 8 —→←4→←———— 39 BITS × 4 CHANNELS (=156 BITS ) ————→

*FIG. 1E*

←—— 4 BITS ——→   ←—— 4 BITS ——→   ←—— 4 BITS ——→   - - - - - - -   ← 4 BITS →

| #1/1 | #2/1 | #3/1 | #4/1 | #1/2 | #2/2 | #3/2 | #4/2 | #1/3 | #2/3 | #3/3 | #4/3 | - - - - - - | #1/39 | #2/39 | #3/39 | #4/39 |

←—FIRST BIT—→ ←—SECOND BIT—→ ←—THIRD BIT—→ - - - - - - - ←—39 TH BIT—→

EP 0 242 121 B1

# FIG. 2

## FIG. 3

| CHANNEL | MODE |
|---------|--------|
| 1 | A OR C |
| 2 | A OR C |
| 3 | A OR B |
| 4 | A OR B |

## FIG. 4

**A MODE** — 39 BITS

| L | R | ECC |
|---|---|-----|

16 BITS — 16 BITS — 7 BITS

**B MODE**

| $L_1$ | $R_1$ | $L_2$ | $R_2$ | ECC |
|-------|-------|-------|-------|-----|

8 BITS — 8 BITS — 8 BITS — 8 BITS — 7 BITS

**C MODE**

| DIGITAL DATA | ECC |
|--------------|-----|

32 BITS — 7 BITS

FIG. 5

1 2 3 4     38 39 BITS

#1

#2

#3

#4

FIG. 6

SERVICE BITS OF 1 MULTI-SUPER FRAME (= 4 BITS × 1280 FRAMES = 5120 BITS)

SB OF SF 1 — 1024 BITS — 4 | 12 | 1008

SB OF SF 2 — 1024 BITS

SB OF SF 3 — 1024 BITS

SB OF SF 4 — 1024 BITS

SB OF SF 5 — 1024 BITS — 4 | 12 | 960 | 48

SB
SFSY

SFSY | PGMM | SLOT 1~63 | PGMM | SLOT 64~126 | PGMM | SLOT 127~156 / SLOT 1~33 | PGMM | SLOT 34~96 | PGMM | SLOT 97~156

SFSY    SFSY    SFSY    SFSY

16 BITS × 63 SLOTS

16 BITS × 60 SLOTS

## FIG. 7

|   | BITS | MODE | CONTENTS OF SIGNAL | ENPHASIS |
|---|------|------|--------------------|----------|
| 1 | L L L | A | CD | OFF |
| 2 | L L H | A | CD | OFF |
| 3 | L H L | A | 16 BIT DIGITAL SIGNAL | OFF |
| 4 | H L L | C | #1.#2 DIGITAL DATA | OFF |
|   |       | B | #3.#4 8 BIT DIGITAL SIGNAL | |
| 5 | H L H | C | CD – ROM | OFF |
| 6 | H H L | - | - | - |
| 7 | L H H | - | - | - |
| 8 | H H H | - | - | - |

FIG. 8

SYNC, SB, ECC

FIG. 9

EP 0 242 121 B1

$t \longrightarrow$

$1/2 fs = 11.34 \mu sec$
word

**FIG. 10A**  | L | R | L | R | L | R | L |

**FIG. 10B**

| (4 BITS) | (24 BITS) | ... 1 0 0 1 0 1 0 | (4 BITS) |

SYNC    AUDIO DATA    CONTROL

**FIG. 10C**

1 1 1 0 0 1 0 0

0.5V

BIPHASE-MARK